# EUROPEAN PATENT APPLICATION

(11) **EP 3 564 729 A1**
(43) Date of publication of application: **06.11.2019**
(21) Application number: 17893208.3
(22) Date of filing: 18.07.2017
(51) Int. Cl.: G02B 27/01

(54) **VIRTUAL REALITY DISPLAY DEVICE**

(30) Priority: 17.01.2017 CN 201710031218
(71) Applicant: Huawei Technologies Co., Ltd., Longgang District Shenzhen, Guangdong 518129 (CN)
(72) Inventor: OUYANG, Shihong, Shenzhen Guangdong 518129 (CN)
(74) Representative: Thun, Clemens
(86) International application number: PCT/CN2017/093388
(87) International publication number: WO 2018/133349

(57) **Abstract**

A display apparatus for virtual reality is provided. The display apparatus includes: an image source (210), configured to output one beam of original light carrying N frames of original virtual images, where the N frames of original virtual images can be spliced together into one frame of target virtual image, and N is an integer greater than or equal to 2; and an image extending component (220), configured to receive the original light, and convert the original light into N beams of target linearly polarized light. The N beams of target linearly polarized light are separated from each other, and include first target linearly polarized light with a first linear polarization direction and second target linearly polarized light with a second linear polarization direction. The first linear polarization direction is orthogonal to the second linear polarization direction. Each beam of target linearly polarized light carries one frame of original virtual image. Locations of two frames of original virtual images carried in two adjacent beams of target linearly polarized light are adjacent in the target virtual image, and in visual of a holder of the display apparatus, edges of two adjacent frames of original virtual images coincide. A view of field is increased by using the display apparatus.

## Description

This application claims priority to Chinese Patent Application No. 201710031218.7, filed with the Chinese Patent Office on January 17, 2017 and entitled "DISPLAY APPARATUS FOR VIRTUAL REALITY", which is incorporated herein by reference in its entirety.

### TECHNICAL FIELD

The present invention relates to the virtual reality display field, and in particular, to a display apparatus for virtual reality.

### BACKGROUND

In an augmented reality (Augmented Reality, AR) imaging system, a performance indicator that affects user experience includes a field of view (Filed of View, FOV), and a larger FOV indicates better virtual reality experience of a user. Existing several types of micro monitors support FOVs ranging from 20 degrees to 30 degrees, such as a liquid crystal on silicon (Liquid Crystal on Silicon, LCOS) monitor, a micro organic light emitting diode (micro organic light emitting diode, micro-OLED), and a digital light processor (digital light processing, DLP). The FOV in this case is relatively small, and virtual reality experience of the user is relatively poor.

### SUMMARY

Embodiments of the present invention provide a display apparatus for virtual reality. An image extending component is used to splice separated virtual images together, thereby increasing an FOV and improving user experience.

According to a first aspect, an embodiment of the present invention provides a display apparatus for virtual reality. The display apparatus includes:
an image source, configured to output one beam of original light carrying N frames of original virtual images, where the N frames of original virtual images can be spliced into one frame of target virtual image, the N frames of original virtual images have a same size, and N is an integer greater than or equal to 2; and
an image extending component, configured to receive the original light, convert the original light into N beams of target linearly polarized light, and splice the N frames of original virtual images carried in the N beams of target linearly polarized light into the target virtual image.

The N beams of target linearly polarized light are separated from each other, the N beams of target linearly polarized light include first target linearly polarized light and second target linearly polarized light, the first target linearly polarized light has a first linear polarization direction, the second target linearly polarized light has a second linear polarization direction, and the first linear polarization direction is orthogonal to the second linear polarization direction.

Each beam of target linearly polarized light carries one frame of original virtual image, locations of two frames of original virtual images carried in two adjacent beams of target linearly polarized light are also adjacent in the target virtual image, and in visual of a holder of the display apparatus, edges of two adjacent frames of original virtual images that are close to each other coincide. At an output end of the image extending component, the N frames of original virtual images carried in the N beams of target linearly polarized light are arranged along a straight line direction, and each of the N beams of target linearly polarized light is adjacent to at least another one beam of target linearly polarized light and is adjacent to at most other two beams of target linearly polarized light.

In the display apparatus for virtual reality provided in this embodiment of the present invention, the image extending component is used to splice the N frames of original virtual images into the one frame of target virtual image, thereby increasing an FOV.

With reference to the first aspect, in a first possible implementation of the first aspect, the image extending component may include N-1 image extenders, each image extender is configured to convert one received beam of light, that is, one beam of original light, into two separated beams of linearly polarized light, each beam of linearly polarized light carries at least one frame of original virtual image, one of the two beams of linearly polarized light has the first linear polarization direction, and the other beam of linearly polarized light has the second linear polarization direction.

With reference to the first possible implementation of the first aspect, in a second possible implementation of the first aspect, the image extender may include a polarization controller, a beam splitter prism, and a total reflection surface.

The polarization controller is configured to receive the light, and convert the light into the two beams of linearly polarized light; and
the beam splitter prism is configured to separate the two beams of linearly polarized light from each other, where an included angle between a transmission direction of one separated beam of linearly polarized light and a transmission direction of the other separated beam of linearly polarized light is greater than 0 degrees and less than 180 degrees.

In this embodiment of the present invention, the beam splitter prism uses a polarization beam splitter (Polarization Beam Splitter, PBS), a Glan-Thompson prism, a Brewster prism, a Wollaston prism, a Rochon prism, a Glan-Taylor prism, a 56° polarization splitter plate, a 45° polarization splitter plate, or a polarization beam splitter/combiner.

The total reflection surface is configured to receive one of the two beams of linearly polarized light separated by the beam splitter prism, and reflect the beam of linearly polarized light, so that a transmission direction of the reflected beam of linearly polarized light is the same as a transmission direction of the other beam of the two beams of linearly polarized light separated by the beam splitter prism.

With reference to the first possible implementation of the first aspect or the second possible implementation of the first aspect, in a third possible implementation of the first aspect, there are R image extenders in a direction opposite to an optical transmission path of one of the N beams of target linearly polarized light, where R is an integer greater than or equal to 1 and less than N-1.

When R is equal to 1, the one image extender is a first image extender, an input end of the first image extender communicates with an output end of the image source, and the first image extender is configured to receive the original light, and convert the original light into two beams of first-level linearly polarized light, where one beam of the first-level linearly polarized light is target linearly polarized light.

When R is equal to 2, the two image extenders include a first image extender and a second image extender, an input end of the first image extender communicates with an output end of the image source, and an output end of the first image extender communicates with an input end of the second image extender, where
the first image extender is configured to receive the original light, and convert the original light into two beams of first-level linearly polarized light; and the second image extender is configured to receive one beam of the first-level linearly polarized light, and convert the first-level linearly polarized light into two beams of second-level linearly polarized light, where one beam of the second-level linearly polarized light is target linearly polarized light.

When R is an integer greater than or equal to 3, the R image extenders include a first image extender and an M^{th} image extender, where M is an integer greater than or equal to 2 and less than or equal to R; and an input end of the first image extender communicates with an output end of the image source, and an input end of the M^{th} image extender communicates with an output end of an (M-1)^{th} image extender, where
the first image extender is configured to receive the original light, and convert the original light into two beams of first-level linearly polarized light; and the M^{th} image extender is configured to receive one beam of (M-1)^{th}-level linearly polarized light, and convert the (M-1)^{th}-level linearly polarized light into two beams of M^{th}-level linearly polarized light, and when M is equal to R, the M^{th}-level linearly polarized light is R^{th}-level linearly polarized light, and one beam of the R^{th}-level linearly polarized light is target linearly polarized light.

With reference to the third possible implementation of the first aspect, in a fourth possible implementation of the first aspect, the display apparatus may further include a light beam regulator, and the light beam regulator is located between the image source and the first image extender.

The light beam regulator is configured to receive the original light, reduce a diameter of the original light, and transmit, to the first image extender, the original light whose diameter has been reduced, so that the first image extender performs conversion and separation processing on the original light.

In an embodiment of the present invention, the light beam regulator may reduce the diameter of the original light to a range of 1 millimeter to 20 millimeters.

In the display apparatus for virtual reality provided in this embodiment of the present invention, the light beam regulator is disposed between the image source and the first image extender to reduce the light beam diameter of the original light, thereby implementing miniaturization of the display apparatus for virtual reality, that is, reducing a size of the display apparatus, and further reducing a weight of the display apparatus.

With reference to any one of the first aspect or the possible implementations of the first aspect, in a fifth possible implementation of the first aspect, the display apparatus may further include an amplifier-transmitter.

The image extending component is further configured to transmit the target virtual image to the amplifier-transmitter.

The amplifier-transmitter is configured to receive the target virtual image, and amplify and transmit the target virtual image.

According to a second aspect, an embodiment of the present invention provides a display apparatus for virtual reality. The display apparatus may include:
an image source, configured to output one beam of light carrying two frames of virtual images; and
an image extending component, configured to receive the light, convert the light into two beams of linearly polarized light, and transmit, respectively to the left eye and the right eye of a holder of the display apparatus, the two frames of virtual images carried in the two beams of linearly polarized light, where linear polarization directions of the two beams of linearly polarized light are orthogonal to each other, and each beam of linearly polarized light carries one frame of virtual image.

In the display apparatus for virtual reality provided in this embodiment of the present invention, the image extending component is used to convert the two frames of virtual images into the two beams of linearly polarized light, each beam of linearly polarized light carries one frame of virtual image, and the two frames of virtual images are respectively transmitted to the left eye and the right eye of the user holding the display apparatus, thereby increasing an FOV

With reference to the second aspect, in a first possible implementation of the second aspect, the image extending component may include a polarization controller and a beam splitter prism.

The polarization controller is configured to receive the light, and convert the light into the two beams of linearly polarized light.

The beam splitter prism is configured to separate the two beams of linearly polarized light from each other, so that the two frames of virtual images carried in the two beams of linearly polarized light are respectively transmitted to the left eye and the right eye of the holder of the display apparatus.

In an embodiment of the present invention, the display apparatus may further include a total reflection surface.

The beam splitter prism is configured to separate the two beams of linearly polarized light from each other, where an included angle between a transmission direction of one separated beam of linearly polarized light and a transmission direction of the other separated beam of linearly polarized light is greater than 0 degrees and less than 180 degrees.

The total reflection surface is configured to receive one of the two beams of linearly polarized light separated by the beam splitter prism, reflect the beam of linearly polarized light, so that a transmission direction of the reflected beam of linearly polarized light is the same as a transmission direction of the other beam of the two beams of linearly polarized light separated by the beam splitter prism, and a virtual image carried in one beam of linearly polarized light is transmitted to the left eye or the right eye of the holder of the display apparatus.

In this embodiment of the present invention, the beam splitter and the total reflection surface are kept at a distance. The distance can satisfy: one beam of the two beams of linearly polarized light separated by the beam splitter prism is transmitted to one eye of the holder of the display apparatus, and the other beam of linearly polarized light that is received and reflected by the total reflection surface can be transmitted to the other eye of the holder of the display apparatus.

With reference to the second aspect or the first possible implementation of the second aspect, in a second possible implementation of the second aspect, the display apparatus may further include a light beam regulator, and the light beam regulator is located between the image source and the image extending component.

The light beam regulator is configured to receive original light, reduce a diameter of the original light, and transmit, to the image extending component, the original light whose diameter has been reduced, so that the image extending component performs conversion and separation processing on the original light.

In an embodiment of the present invention, the light beam regulator may reduce the diameter of the original light to a range of 1 millimeter to 20 millimeters.

In the display apparatus for virtual reality provided in this embodiment of the present invention, the light beam regulator is disposed between the image source and the image extending component to reduce the light beam diameter of the original light, thereby implementing miniaturization of the display apparatus for virtual reality, and further reducing a size of the display apparatus and a weight of the display apparatus.

With reference to any one of the second aspect or the possible implementations of the second aspect, in a third possible implementation of the second aspect, the display apparatus may further include an amplifier-transmitter, configured to separately amplify and transmit two frames of virtual images carried in the two beams of linearly polarized light.

In the display apparatus for virtual reality provided in this embodiment of the present invention, the image extending component is used to splice the N frames of original virtual images into the one frame of target virtual image, thereby increasing an FOV.

### DESCRIPTION OF DRAWINGS

FIG. 1(a) to FIG. 1(d) are schematic diagrams of a display process of virtual reality according to an embodiment of the present invention;
FIG. 2 is a schematic diagram of a display apparatus for virtual reality according to an embodiment of the present invention;
FIG. 3 is a schematic diagram of a display apparatus for virtual reality according to an embodiment of the present invention;
FIG. 4 is a schematic diagram of another display apparatus for virtual reality according to an embodiment of the present invention;
FIG. 5 is a schematic diagram of a photosensitive system according to an embodiment of the present invention;
FIG. 6 is a schematic diagram of still another display apparatus for virtual reality according to an embodiment of the present invention; and
FIG. 7 is a schematic diagram of a display apparatus for virtual reality according to an embodiment of the present invention.

### DESCRIPTION OF EMBODIMENTS

The embodiments of the present invention provide a display apparatus for virtual reality. An image extending component is used to spatially splice original virtual images that are output by an image source at different moments based on a preset frequency into an intact virtual image, and then an amplifier-transmitter is used to amplify and output the virtual image. The display apparatus for virtual reality provided in the present invention increases an FOV.

In an augmented reality imaging system, an image presentation system is most crucial hardware. The image presentation system is configured to present information about a virtual image to eyes of a holder of the image presentation system. A conventional image presentation system includes two parts: an image source and an amplification and transmission system. The image source is configured to generate a virtual image, and the amplification and transmission system is configured to amplify the virtual image and transmit the virtual image to the eyes of the holder of the image presentation system.

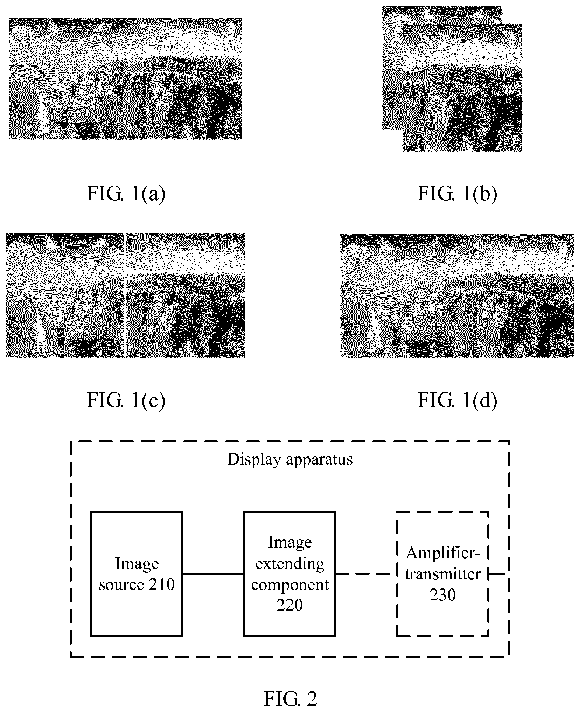

In the embodiments of the present invention, as shown in FIG. 1(a) and FIG. 1(b), a high-resolution image is first divided into two sub-images; then the two sub-images are separately output at different moments at a human-eye perceivable frequency (approximately at 30 Hz); then the two sub-images are spatially separated by using an image extending component 220 (referring to FIG. 2), and then the two sub-images are spliced together (as shown in FIG. 1(c)); and finally a spliced image is amplified by an amplifier-transmitter 230 (referring to FIG. 2), and is output to human eyes. Because the two sub-images are separately transmitted at the different moments at the human-eye perceivable frequency, the human eyes can perceive the entire image, as shown in FIG. 1(d).

It should be noted that in the embodiments of the present invention, "virtual" is relatively real. A virtual image means that an image having undergone processing such as simulation is superposed over a real environment in one picture or one space, so that a user perceives that the virtual image exists in a real world.

The following describes technical solutions of the present invention in detail with reference to the accompanying drawings.

FIG. 2 is a schematic diagram of a display apparatus for virtual reality according to an embodiment of the present invention. As shown in FIG. 2, the display apparatus includes an image source 210 and an image extending component 220.

The image source 210 is configured to output one beam of original light carrying N frames of original virtual images, where the N frames of original virtual images can be spliced into one frame of target virtual image, and N is an integer greater than or equal to 2.

In this embodiment of the present invention, the N frames of original virtual images may be set to a same size.

The image extending component 220 is configured to receive the original light, convert the original light into N beams of target linearly polarized light, and splice the N frames of original virtual images carried in the N beams of target linearly polarized light into the target virtual image.

The N beams of target linearly polarized light are separated from each other, and the N beams of target linearly polarized light include first target linearly polarized light and second target linearly polarized light. The first target linearly polarized light has a first linear polarization direction, the second target linearly polarized light has a second linear polarization direction, and the first linear polarization direction is orthogonal to the second linear polarization direction.

Each beam of target linearly polarized light carries one frame of original virtual image. Locations of two frames of original virtual images carried in the two adjacent beams of target linearly polarized light are also adjacent in the target virtual image. In visual of a holder of the display apparatus, edges of two adjacent frames of original virtual images close to each other coincide. At an output end of the image extending component, the N frames of original virtual images carried in the N beams of target linearly polarized light are arranged along a straight line direction, and each of the N beams of target linearly polarized light is adjacent to at least another one beam of target linearly polarized light and is adjacent to at most other two beams of target linearly polarized light. Alternatively, the N frames of original virtual images carried in the N beams of target linearly polarized light are arranged along one direction, and each beam of target linearly polarized light is adjacent to one or two of the N beams of target linearly polarized light.

In this embodiment of the present invention, the original virtual image is one of a plurality of sub-images that are obtained by segmenting in advance one, two, or more high-resolution images.

The image source 210 outputs, at different moments at the human-eye perceptible frequency, the original light carrying a plurality of frames of original virtual images, for example, the N frames of original virtual images, where N may be an integer greater than or equal to 2. In this embodiment of the present invention, a value of N depends on a refreshing rate of the image source 210 and the image extending component 220.

The image extending component 220 converts the original light carrying the N frames of original virtual images into the N beams of target linearly polarized light. The N beams of target linearly polarized light include a first target polarized light with a first polarization direction and second target linearly polarized light with a second polarization direction. One beam of target linearly polarized light may carry one frame of original virtual image. Two adjacent frames of original virtual images of the converted N frames of original virtual images are converted into two beams of target linearly polarized light whose polarization directions are mutually orthogonal. The two beams of target linearly polarized light are the first target linearly polarized light with the first polarization direction and the second target linearly polarized light with the second polarization direction, and the first polarization direction is orthogonal to the second polarization direction.

The N frames of original virtual images carried in the converted N beams of target linearly polarized light can be spliced into the target virtual image. Locations of two frames of original virtual images carried in two adjacent beams of target linearly polarized light are adjacent in the target virtual image. In visual of the user, edges of two frames of original virtual images coincide, or in visual of the user, two frames of original virtual images carried in two adjacent frames of target polarized light are seamlessly spliced in the target virtual image. The display apparatus for virtual reality provided in this embodiment of the present invention increases an FOV, thereby improving user experience. According to the display apparatus for virtual reality provided in this embodiment of the present invention, in comparison with the prior art that a plurality of image sources are used to splice virtual images to increase an FOV, a size of the display apparatus is reduced, and a weight of the display apparatus is reduced, thereby improving user experience.

Optionally, as shown in FIG. 2, in this embodiment of the present invention, the display system may further include an amplifier-transmitter 230.

The amplifier-transmitter 230 is configured to receive the target virtual image, and amplify and transmit the target virtual image.

In this embodiment of the present invention, the amplifier-transmitter 230 amplifies the received target virtual image, and transmits the amplified the target virtual image to eyes of the holder of the display apparatus, so that the holder of the display apparatus virtually perceives the virtual image. In this embodiment of the present invention, the holder of the display apparatus may be referred to as a user.

In the display apparatus provided in this embodiment of the present invention, the image extending component 220 is used to splice the N frames of original virtual images into the target virtual image, to increase the FOV, and the amplifier-transmitter 230 is used to amplify the target virtual image and transmit the target virtual image to the eyes of the user, to further improve user experience.

In addition, according to the display apparatus for virtual reality provided in this embodiment of the present invention, in comparison with an FOV increasing method in the prior art, more image sources and amplifier-transmitters are used costs of the display apparatus are reduced, and the weight of the display apparatus is also reduced, thereby improving user experience.

In addition, in the prior art, image sources are increased to increase an FOV, and as a result, power consumption of the display apparatus is directly increased. For a mobile terminal, a time of use of the mobile terminal is directly reduced, decreasing user experience. Compared with a display apparatus for increasing an FOV provided in the prior art, the display apparatus for virtual reality provided in this embodiment of the present invention has lower display apparatus power consumption and longer use time.

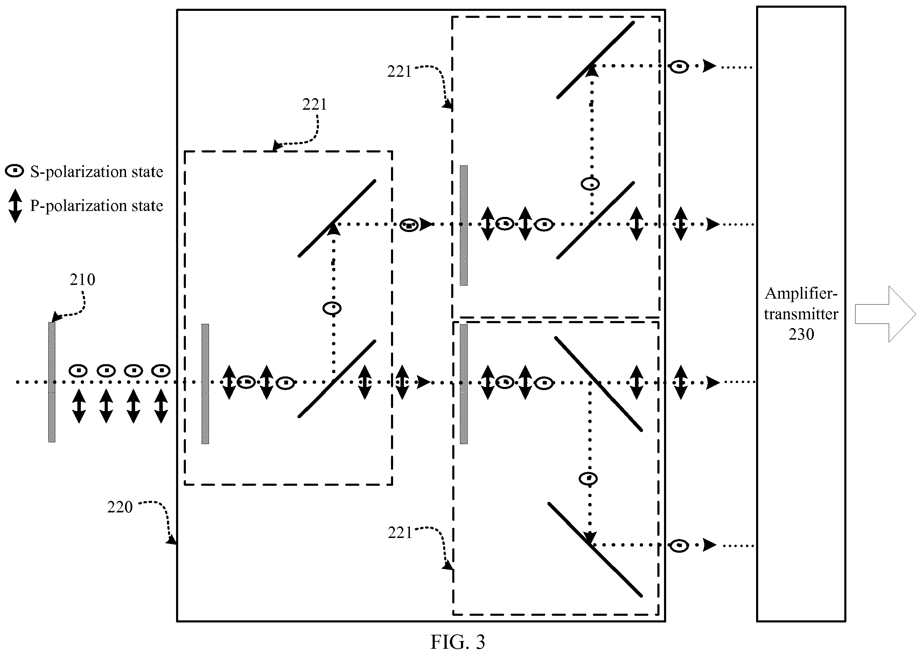

Optionally, in this embodiment of the present invention, as shown in FIG. 3, the image extending component 220 may include N-1 image extenders 221, each image extender is configured to convert one received beam of light into two separated beams of linearly polarized light, each beam of linearly polarized light carries at least one frame of original virtual image, one of the two beams of linearly polarized light has a first linear polarization direction, and the other beam of linearly polarized light has a second linear polarization direction.

In this embodiment of the present invention, a 1^{st} image extender in the image extending component 220 is an image extender that communicates with an output end of the image source 210. A beam of light received by the first image extender is a beam of original light. The first image extender converts the beam of original light into two separated beams of linearly polarized light.

As shown in FIG. 3, the first image extender 221 receives the original light that is output by the image source 210 and that carries a original virtual image, and converts the original light into linearly polarized light of a p-polarization state and linearly polarized light of an s-polarization state, that is, linearly polarized light with a p-polarization direction and linearly polarized light with an s-polarization direction. In this embodiment of the present invention, the p-polarization direction may be referred to as the first linear polarization direction, and the s-polarization direction may be referred to as the second linear polarization direction. Alternatively, the s-polarization direction may be referred to as the first linear polarization direction, and the p-polarization direction may be referred to as the second linear polarization direction. This is not limited in this embodiment of the present invention.

A beam of light that is received by an image extender other than the 1^{st} image extender in the image extending component 220 may be one of two beams of linearly polarized light obtained by converting a received light beam by an image extender that communicates with the image extender. For example, as shown in FIG. 3, two image extenders on the right side of the first image extender respectively receive the linearly polarized light with the s-polarization direction and the linearly polarized light with the p-polarization direction that are obtained by converting the original light by the first image extender. It may be considered that the display apparatus for virtual reality provided in this embodiment of the present invention is obtained by cascading a plurality of image extenders, thereby further improving the FOV and improving user experience.

Optionally, in this embodiment of the present invention, the display apparatus may further include an amplifier-transmitter 230.

The amplifier-transmitter 230 is configured to receive the target virtual image, and amplify and transmit the target virtual image. In this embodiment of the present invention, function descriptions about the amplifier-transmitter 230 are the same as function descriptions about the amplifier-transmitter 230 in FIG. 2. For brevity, details are not described herein again.

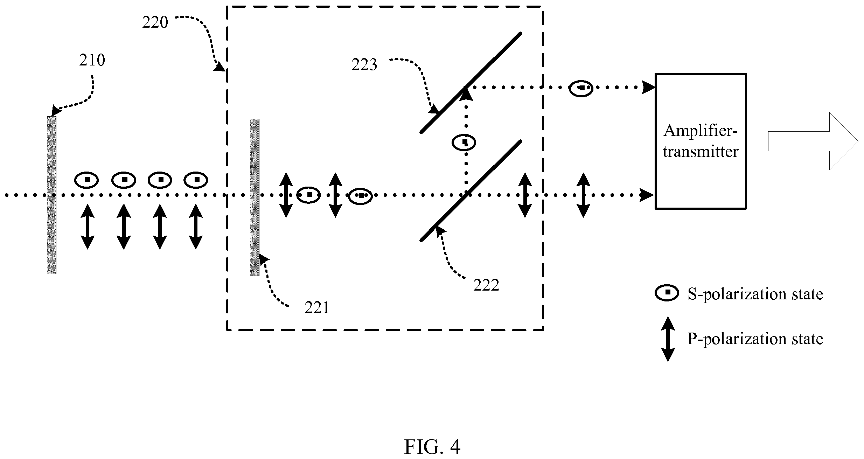

Optionally, in this embodiment of the present invention, as shown in FIG. 4, the image extender 221 may include a polarization controller 2211, a beam splitter prism 2212, and a total reflection surface 2213.

The polarization controller 2211 is configured to receive the light, and convert the light into two beams of linearly polarized light.

As shown in FIG. 4, the display apparatus includes one image extender 221. The polarization controller 2211 in the image extender 221 receives a beam of original light that is output by the image source 210 and that includes a original virtual image, and converts the original light into two beams of linearly polarized light respectively having the p-polarization state and the s-polarization state. One beam of linearly polarized light carries one frame of original virtual image. Original virtual images carried in the two beams of linearly polarized light may be spliced into the target virtual image.

The linearly polarized light of the p-polarization state is orthogonal to the linearly polarized light of the s-polarization state.

In this embodiment of the present invention, the polarization controller 2211 may be a liquid-crystal-type device. A polarization state of a transmitted light is changed by controlling liquid crystal molecules in the liquid-crystal-type device, to ensure that polarization directions of two adjacent beams of converted linearly polarized light are orthogonal to each other.

It should be noted that, FIG. 4 is merely a schematic diagram of an optical path of the display apparatus, and does not impose a limitation to the solution of this embodiment of the present invention.

The beam splitter prism 2212 is configured to separate the two beams of linearly polarized light from each other. An included angle between a transmission direction of one separated beam of linearly polarized light and a transmission direction of the other separated beam of linearly polarized light is greater than 0 degrees and less than 180 degrees.

In this embodiment of the present invention, the included angle between the transmission directions of the two beams of linearly polarized light separated by the beam splitter prism 2212 is related to a used beam splitter prism. In this embodiment of the present invention, the beam splitter prism 222 may be one of a polarization beam splitter PBS, a Glan-Thompson prism, a Brewster prism, a Wollaston prism, a Rochon prism, a Glan-Taylor prism, a 56° polarization splitter plate, a 45° polarization splitter plate, or a polarization beam splitter/combiner.

As shown in FIG. 4, the beam splitter prism 2212 is the PBS. The beam splitter prism 2212 separates the linearly polarized light of the p-polarization state from the linearly polarized light of the s-polarization state. The separated linearly polarized light of the p-polarization state is transmitted along an original transmission direction, and the separated linearly polarized light of the s-polarization state is transmitted along a transmission direction that forms an included angle of 90° with the transmission direction of the linearly polarized light of the p-polarization state.

The total reflection surface 2213 is configured to receive one of the two beams of linearly polarized light separated by the beam splitter prism, and reflect the received beam of linearly polarized light, so that a transmission direction of the reflected beam of linearly polarized light is the same as a transmission direction of the other beam of the two beams of linearly polarized light separated by the beam splitter prism.

As shown in FIG. 4, the total reflection surface 2213 receives the linearly polarized light of the s-polarization state separated by the beam splitter prism 2212, and reflects the linearly polarized light of the s-polarization state, so that the transmission direction of the linearly polarized light of the s-polarization state is consistent with the transmission direction of the linearly polarized light of the p-polarization state separated by the beam splitter prism 2212.

The beam splitter prism 2212 and the total reflection surface 2213 respectively transmit the linearly polarized light of the p-polarization state and the linearly polarized light of the s-polarization state to the amplifier-transmitter 230, so that the amplifier-transmitter 230 amplifies the original virtual images carried in the linearly polarized light, and transmits the virtual image to the eyes of the user.

The display apparatus for virtual reality provided in this embodiment of the present invention increases the FOV In addition, in comparison with the prior art that a plurality of image sources are used to perform image splicing to increase the FOV, a size and a weight of the display apparatus are reduced, further improving user experience.

It should be noted that, the N-1 image extenders 221 included in the image extending component 220 in the display apparatus for virtual reality provided in FIG. 3 may be implemented by cascading image extenders provided in FIG. 4. A process of processing, by the image extender 221, the original light carrying the original virtual image is the same as a process of processing the original light by the image extender in FIG. 4. For brevity, details are not described herein again.

In addition, according to a principle of optical reversibility, the display apparatuses of virtual reality provided in FIG. 3 and FIG. 4 may be used on a reverse optical path in a photosensitive scenario.

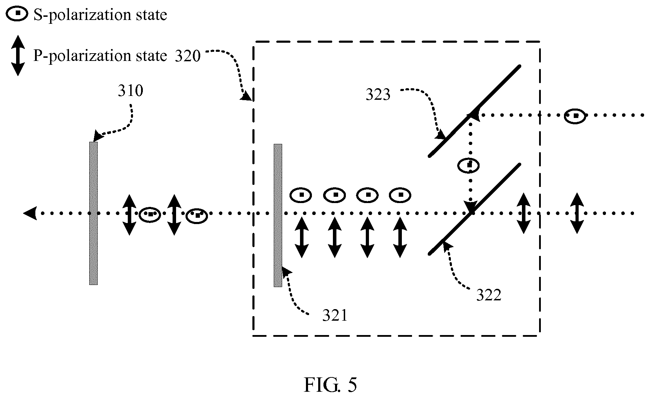

FIG. 5 is a schematic diagram of a reverse optical path corresponding to the display apparatus in FIG. 4. This enlarges a photosensitive image area, saves a charge-coupled device (Charge-coupled Device, CCD), and reduces a size of a photosensitive apparatus and power consumption of the photosensitive apparatus.

Optionally, in this embodiment of the present invention, there are R image extenders in a direction opposite to an optical transmission path of one of the N beams of target linearly polarized light, where R is an integer greater than or equal to 1 and less than N-1.

When R is equal to 1, the one image extender is a first image extender, an input end of the first image extender communicates with an output end of the image source, and the first image extender is configured to receive the original light, and convert the original light into two beams of first-level linearly polarized light, where one beam of the first-level linearly polarized light is target linearly polarized light, as shown in FIG. 5.

When R is equal to 2, the two image extenders include a first image extender and a second image extender. An input end of the first image extender communicates with an output end of the image source, and an output end of the first image extender communicates with an input end of the second image extender.

The first image extender is configured to receive the original light, and convert the original light into two beams of first-level linearly polarized light. The second image extender is configured to receive one beam of the first-level linearly polarized light, and convert the first-level linearly polarized light into two beams of second-level linearly polarized light, where one beam of the second-level linearly polarized light is target linearly polarized light.

When R is an integer greater than or equal to 3, the R image extenders include a first image extender and an M^{th} image extender, where M is an integer greater than or equal to 2 and less than or equal to R. An input end of the first image extender communicates with an output end of the image source, and an input end of the M^{th} image extender communicates with an output end of an (M-1)^{th} image extender.

The first image extender is configured to receive the original light, and convert the original light into two beams of first-level linearly polarized light; and the M^{th} image extender is configured to receive one beam of (M-1)^{th}-level linearly polarized light, and convert the (M-1)^{th}-level linearly polarized light into two beams of M^{th}-level linearly polarized light. When M is equal to R, the M^{th}-level linearly polarized light is R^{th}-level linearly polarized light, and one beam of the R^{th}-level linearly polarized light is target linearly polarized light.

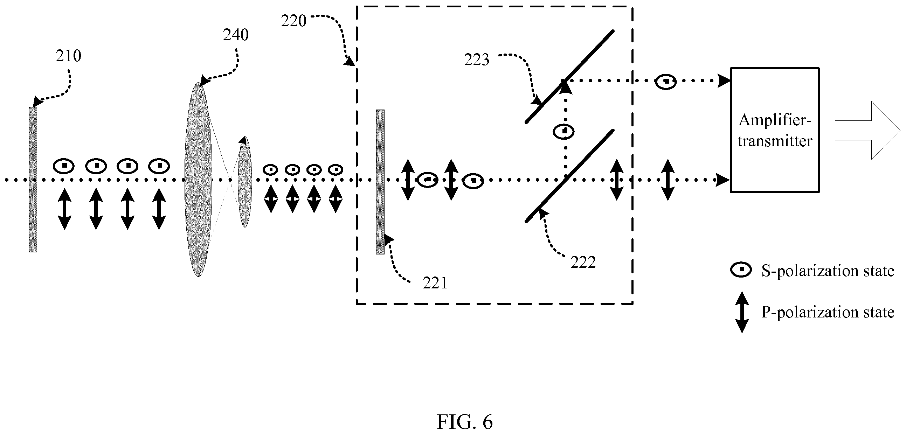

Optionally, in an embodiment of the present invention, as shown in FIG. 6, the display apparatus may further include a light beam regulator 240. The light beam regulator 210 is located between the image source 210 and the first image extender.

The light beam regulator 240 is configured to receive the original light output by the image source 210 and reduce a diameter of the original light, and then conversion and separation processing are performed on the original light whose diameter has been reduced. The conversion and separation of the original light is performed by a beam splitter prism 221. For specific descriptions, refer to descriptions about the conversion and separation performed on the original light by the beam splitter prism in the display apparatus provided in FIG. 4. For brevity, details are not described herein again.

In this embodiment of the present invention, the light beam regulator may reduce the diameter of the original light to a range of 1 millimeter to 20 millimeters.

According to the display apparatus for virtual reality provided in this embodiment of the present invention, the light beam regulator 240 is added on a side of the image source 210 to reduce the diameter of the light beam, thereby implementing miniaturization of the display apparatus, that is, reducing the size of the display apparatus and the weight of the display apparatus, thereby improving user experience.

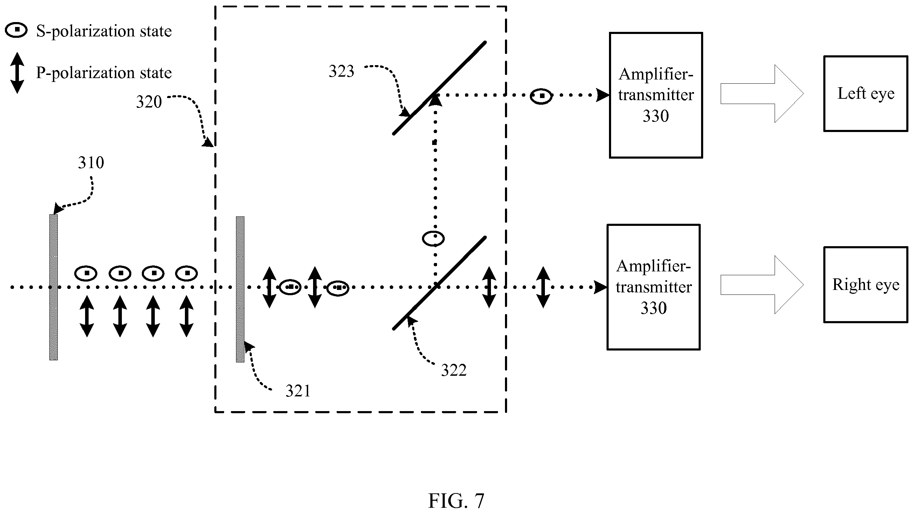

FIG. 7 shows another display apparatus for virtual reality according to an embodiment of the present invention.

As shown in FIG. 7, the display apparatus may include an image source 310 and an image extending component 320.

The image source 310 is configured to output one beam of light carrying two frames of virtual images.

The image extending component 320 is configured to receive the light, convert the light into two beams of linearly polarized light, and transmit, respectively to the left eye and the right eye of a holder of the display apparatus, the two frames of virtual images carried in the two beams of linearly polarized light. Linear polarization directions of the two beams of linearly polarized light are orthogonal to each other, and each beam of linearly polarized light carries one frame of virtual image.

In the display apparatus for virtual reality provided in this embodiment of the present invention, the image extending component 320 receives the light carrying the two beams of virtual images output by the image source 310, and converts the light carrying the two frames of virtual images into two beams of linearly polarized light. One beam of linearly polarized light may carry one frame of virtual image.

Polarization directions of the two beams of converted linearly polarized light are orthogonal to each other. As shown in FIG. 7, the image extending component 320 converts the light carrying the two frames of virtual images output by the image source 310, into linearly polarized light of a p-polarization state and linearly polarized light of an s-polarization state. The linearly polarized light of the p-polarization state is linearly polarized light with a p-polarization direction, and the linearly polarized light with the s-polarization state is the linearly polarized light with an s-polarization direction. The p-polarization direction is orthogonal to the s-polarization direction.

The image extending component 320 transmits, respectively to the left eye and the right eye of a user holding the display apparatus, the two frames of virtual images carried in the two beams of converted linearly polarized light, so that the user can perceive the virtual images.

According to the display apparatus for virtual reality provided in this embodiment of the present invention, one image source is used to transmit the virtual images respectively to the left eye and the right eye of the holder of the display apparatus, increasing an FOV and thereby improving user experience. In addition, in comparison with the prior art, this also saves costs of the display apparatus and reduces power consumption, a size, and a weight.

The display apparatus for virtual reality provided in FIG. 7 is obtained by reconstructing the display apparatus for virtual reality provided in FIG. 4, to be specific, by keeping a distance between the beam splitter prism 2212 and the total reflection surface 2213 in FIG. 4. The distance meets a distance between the two eyes of the holder of the display apparatus. The display apparatus for virtual reality provided in FIG. 7 transmits the virtual images respectively to the left eye and the right eye of the holder of the display apparatus, to improve user experience.

Optionally, as shown in FIG. 7, in this embodiment of the present invention, the image extending component 320 may include a polarization controller 321 and a beam splitter prism 322.

The polarization controller 321 is configured to receive the light, and convert the light into two beams of linearly polarized light.

In this embodiment of the present invention, the polarization controller 321 may be a liquid-crystal-type device, and changes a polarization state of a transmitted light by controlling a liquid crystal molecule in the liquid-crystal-type device.

The beam splitter prism 322 is configured to separate the two beams of linearly polarized light from each other, so that the two frames of virtual images carried in the two beams of linearly polarized light are respectively transmitted to the left eye and the right eye of the holder of the display apparatus.

To be specific, the virtual image carried in one beam of linearly polarized light is transmitted to the left eye of the holder of the display apparatus, and the virtual image carried in the other beam of linearly polarized light is transmitted to the right eye of the holder of the display apparatus.

In this embodiment of the present invention, the beam splitter prism 322 may be one of a polarization beam splitter PBS, a Glan-Thompson prism, a Brewster prism, a Wollaston prism, a Rochon prism, a Glan-Taylor prism, a 56° polarization splitter plate, a 45° polarization splitter plate, or a polarization beam splitter/combiner.

Optionally, in another embodiment of the present invention, as shown in FIG. 7, the image extending component 320 may further include a total reflector 323.

The total reflector 323 is configured to receive one of the two beams of linearly polarized light separated by the beam splitter prism 322, and reflect the received beam of linearly polarized light, so that a transmission direction of the reflected beam of linearly polarized light is consistent with a transmission direction of the other beam of the two beams of linearly polarized light separated by the beam splitter prism 322. In the display apparatus for virtual reality provided in this embodiment of the present invention, the image extending component is used to transmit the virtual image to the eyes of the user, thereby increasing the FOV and improving user experience. In addition, one image source is used to transmit the virtual images respectively to the left eye and the right eye of the user, thereby further improving user experience.

In the prior art, to improve user experience, two display apparatuses respectively corresponding to the left eye and the right eye are usually used. However, using the two display apparatuses not only increase hardware costs of the display apparatus but also increase power consumption, a size, and a weight of the display apparatus.

In comparison with the prior art, with the display apparatus for virtual reality provided in this embodiment of the present invention, one image source is used to provide the image to the left eye and the right eye of the user, saving hardware costs of the display apparatus and reducing the power consumption, the size, and the weight.

In addition, in an embodiment of the present invention, the display apparatus may further include a light beam regulator (not shown), and the light beam regulator may be located between the image source and the image extending component.

The light beam regulator is configured to receive original light, reduce a diameter of the original light, and transmit, to the image extending component, the original light whose diameter has been reduced, so that the image extending component performs conversion and separation processing on the original light.

In this embodiment of the present invention, the light beam regulator may reduce the diameter of the original light to a range of 1 millimeter to 20 millimeters.

In the display apparatus for virtual reality provided in this embodiment of the present invention, the light beam regulator is added on a side of the image source to reduce the diameter of the light beam, thereby implementing miniaturization of the display apparatus, that is, reducing the size of the display apparatus and the weight of the display apparatus.

In the foregoing specific implementations, the objective, technical solutions, and benefits of the present invention are further described in detail. It should be understood that the foregoing descriptions are merely specific implementations of the present invention, but are not intended to limit the protection scope of the present invention. Any modification, equivalent replacement, or improvement made without departing from the spirit and principle of the present invention shall fall within the protection scope of the present invention.

## Claims

1. A display apparatus for virtual reality, wherein the apparatus comprises:
an image source, configured to output one beam of original light carrying N frames of original virtual images, wherein the N frames of original virtual images can be spliced into one frame of target virtual image, the N frames of original virtual images have a same size, and N is an integer greater than or equal to 2; and
an image extending component, configured to receive the original light, convert the original light into N beams of target linearly polarized light, and splice the N frames of original virtual images carried in the N beams of target linearly polarized light into the target virtual image; wherein
the N beams of target linearly polarized light are separated from each other, the N beams of target linearly polarized light comprise first target linearly polarized light and second target linearly polarized light, the first target linearly polarized light has a first linear polarization direction, the second target linearly polarized light has a second linear polarization direction, and the first linear polarization direction is orthogonal to the second linear polarization direction; and
each beam of target linearly polarized light carries one frame of original virtual image, locations of two frames of original virtual images carried in two adjacent beams of target linearly polarized light are also adjacent in the target virtual image, and in visual of a holder of the display apparatus, adjacent edges of two adjacent frames of original virtual images coincide; and at an output end of the image extending component, the N frames of original virtual images carried in the N beams of target linearly polarized light are arranged along a straight line direction, and each of the N beams of target linearly polarized light is adjacent to at least another one beam of target linearly polarized light and is adjacent to at most other two beams of target linearly polarized light.

2. The display apparatus according to claim 1, wherein the image extending component comprises N-1 image extenders, each image extender is configured to convert one received beam of light into two separated beams of linearly polarized light, each beam of linearly polarized light carries at least one frame of original virtual image, one of the two beams of linearly polarized light has the first linear polarization direction, and the other beam of linearly polarized light has the second linear polarization direction.

3. The display apparatus according to claim 2, wherein the image extender comprises a polarization controller, a beam splitter prism, and a total reflection surface, wherein
the polarization controller is configured to receive the light, and convert the light into the two beams of linearly polarized light;
the beam splitter prism is configured to separate the two beams of linearly polarized light from each other, wherein an included angle between a transmission direction of one separated beam of linearly polarized light and a transmission direction of the other separated beam of linearly polarized light is greater than 0 degrees and less than 180 degrees; and
the total reflection surface is configured to reflect the other beam of linearly polarized light, so that a transmission direction of the other reflected beam of linearly polarized light is the same as the transmission direction of the one beam of linearly polarized light.

4. The display apparatus according to claim 2 or 3, wherein
there are R image extenders in a direction opposite to an optical transmission path of one of the N beams of target linearly polarized light, wherein R is an integer greater than or equal to 1 and less than N-1, wherein
when R is equal to 1, the one image extender is a first image extender, an input end of the first image extender is connected to an output end of the image source, and the first image extender is configured to receive the original light, and convert the original light into two beams of first-level linearly polarized light, wherein one beam of the first-level linearly polarized light is target linearly polarized light;
when R is equal to 2, the two image extenders comprise a first image extender and a second image extender, an input end of the first image extender is connected to an output end of the image source, and an output end of the first image extender is connected to an input end of the second image extender, wherein
the first image extender is configured to receive the original light, and convert the original light into two beams of first-level linearly polarized light; and the second image extender is configured to receive one beam of the first-level linearly polarized light, and convert the first-level linearly polarized light into two beams of second-level linearly polarized light, wherein one beam of the second-level linearly polarized light is target linearly polarized light; or
when R is an integer greater than or equal to 3, the R image extenders comprise a first image extender an M^{th} image extender, wherein M is an integer greater than or equal to 2 and less than or equal to R; and an input end of the first image extender is connected to an output end of the image source, and an input end of the M^{th} image extender is connected to an output end of an (M-1)^{th} image extender, wherein
the first image extender is configured to receive the original light, and convert the original light into two beams of first-level linearly polarized light; and the M^{th} image extender is configured to receive one beam of (M-1)^{th}-level linearly polarized light, and convert the (M-1)^{th}-level linearly polarized light into two beams of M^{th}-level linearly polarized light, and when M is equal to R, the M^{th}-level linearly polarized light is R^{th}-level linearly polarized light, and one beam of the R^{th}-level linearly polarized light is target linearly polarized light.

5. The display apparatus according to claim 4, wherein the display apparatus further comprises a light beam regulator, and the light beam regulator is located between the image source and the first image extender; and
the light beam regulator is configured to receive the original light, reduce a diameter of the original light, and transmit, to the first image extender, the original light whose diameter has been reduced, so that the first image extender performs conversion and separation processing on the original light.

6. The display apparatus according to any one of claims 1 to 5, further comprising an amplifier-transmitter, wherein
the image extending component is further configured to transmit the target virtual image to the amplifier-transmitter; and
the amplifier-transmitter is configured to receive the target virtual image, and amplify and transmit the target virtual image.

7. A display apparatus for virtual reality, wherein the apparatus comprises:
an image source, configured to output one beam of light carrying two frames of virtual images; and
an image extending component, configured to receive the light, convert the light into two beams of linearly polarized light, and transmit, respectively to the left eye and the right eye of a holder of the display apparatus, the two frames of virtual images carried in the two beams of linearly polarized light, wherein linear polarization directions of the two beams of linearly polarized light are orthogonal to each other, and each beam of linearly polarized light carries one frame of virtual image.

8. The display apparatus according to claim 7, wherein the image extending component comprises a polarization controller and a beam splitter prism, wherein
the polarization controller is configured to receive the light, and convert the light into the two beams of linearly polarized light; and
the beam splitter prism is configured to separate the two beams of linearly polarized light from each other, so that the two frames of virtual images carried in the two beams of linearly polarized light are respectively transmitted to the left eye and the right eye of the holder of the display apparatus.

9. The display apparatus according to claim 7 or 8, wherein the display apparatus further comprises a light beam regulator, and the light beam regulator is located between the image source and the image extending component; and
the light beam regulator is configured to receive the light, reduce a diameter of the light, and transmit, to the image extending component, the light whose diameter has been reduced, so that the image extending component performs conversion and separation processing on the light.
